(19) Europäisches Patentamt
European Patent Office
Office européen des brevets

(11) Publication number: 0 117 390 B1

(12) # EUROPEAN PATENT SPECIFICATION

(45) Date of publication of patent specification: 05.09.90

(21) Application number: 84100030.0

(22) Date of filing: 03.01.84

(54) **Process for monitoring incremental environmental exposures of products that undergo progressive quality changes in response to environment stimuli.**

(30) Priority: 25.02.83 US 469880

(43) Date of publication of application: 05.09.84 Bulletin 84/36

(45) Publication of the grant of the patent: 05.09.90 Bulletin 90/36

(84) Designated Contracting States: CH DE FR GB LI NL

(56) References cited:
GB-A-2 052 731
US-A-3 344 670
US-A-3 526 480
US-A-3 907 503
US-A-3 999 946

(73) Proprietor: Lifelines Technology Inc.
116 American Road
Morris Plains, New Jersey 07950 (US)

(72) Inventor: Prusik, Thaddeus
c/o Allied Corporation P.O. Box 2245R
Morristown, NJ 07960 (US)
Inventor: Fields, Stephen Carl
c/o Allied Corporation P.O. Box 2245R
Morristown, NJ 07960 (US)
Inventor: Grabiner, Frederick Robert
c/o Allied Corporation P.O Box 2245R
Morristown, NJ 07960 (US)
Inventor: Eckhardt, Helmut
c/o Allied Corporation P.O. Box 2245R
Morristown NJ 07960 (US)
Inventor: Chance, Ronald Richard
c/o Allied Corporation P.O. Box 2245R
Morristown NJ 07960 (US)
Inventor: Baughman, Ray Henry
c/o Allied Corporation P.O. Box 2245R
Morristown, NJ 07960 (US)

(74) Representative: Madgwick, Paul Roland et al
Ladas & Parry Isartorplatz 5
D-8000 München 2 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 117 390 B1

Courier Press, Leamington Spa, England.

**Description**

The process of this invention relates to a new method for measuring the incremental environmental exposure of environmental indicating devices that are employed to monitor the environmental exposure of products that undergo progressive quality changes in response to environmental stimuli. Chemical, radiation, humidity, temperature, and cumulative time-temperature exposures may be monitored by the process of this invention. Acetylenic compounds having at least two conjugated triple bonds are preferably employed as environmental indicating materials by the novel process. However, the process of this invention may employ materials other than acetylenic compounds as environmental indicating materials.

U.S. Patent No. 3,999,946 (*Patel et al.*) discloses acetylenic compounds having at least two conjugated acetylene moieties that polymerize and undergo irreversible color changes upon exposure to time-temperature stimuli, and which are useful as time-temperature history indicators. *Patel et al.* teach that the extent of polymerization (i.e., time-temperature exposure) may be determined by visual color matching.

U.S. Patent 3,344,670 (Olsen et al.) discloses time-temperature integrators which rely on the color change of paper impregnated with silver nitrate complex to obtain a similar goal.

In the process of this invention, the amount of light that is reflected by the indicating material is measured to obtain a reflectance value. Once the reflectance value has been obtained, the reflectance value is correlated with a predetermined reflectance shelf-life relationship to derive the remaining shelf-life of the product being monitored. Most importantly, the process may be repeatedly performed in an automated fashion. Thus, more accurate remaining shelf-life information may be obtained, human error is eliminated, and the process of determining the remaining shelf-life of a large number of items may be rapidly and easily accomplished.

Brief description of the invention

An automatic process for determining the quality conditions of a product that undergoes progressive quality changes upon exposure to environmental stimuli by attaching an indicator device to the products and performing the following steps:

a. by electro-optically scanning said indicator device, measuring the reflectivity at specified wavelengths of:

(i) at least one region of non-variable reflectivity of said indicator device, said non-variable region being unaffected by said environmental exposure; and

(ii) at least one region of variable reflectivity of said indicator device, said variable region comprising a compound which in response to environmental conditions undergoes incremental changes in reflectivity as said environmental exposure continues, at said specified wavelength;

b. determining the reflectivity of said variable region relative to the reflectivity of said non-variable region; and

c. using the value determined by step b which has been derived by converting the reflectivity measurement obtained by direct detection of the reflectivity to a numerical value to calculate an incremental change in the environmental exposure of said device based upon a pre-established relationship between said reflectivity of step b and the incremental change in the environmental exposure of said device; and

d. calculating from said incremental change in the environmental exposure, the quality condition of a product that undergoes progressive quality changes upon exposure to environmental stimuli, based upon a pre-established relationship between environmental exposure and product quality change.

Brief description of the figures

Figure 1 illustrates an environmental indicator device that may be measured by the process of this invention. The device includes a variable region 1 of reflectivity that comprises an acetylenic compound and four non-variable regions 2, 3, 4 and 5 of reflectivity.

Figures 2, 3 and 4 illustrate an environmental indicator device having a darkened variable region 1, in addition to non-variable regions 2, 3, 4 and 5, due to the exposure of the device to temperature over increasing periods of time.

Figure 5 illustrates an environmental indicator device having a product identification means 6 and an acetylenic compound identification means 7.

Figure 6 illustrates two general types of curves that are obtained when percent reflectance is plotted vs. time. Curve type II is obtained for acetylenic compounds that gradually polymerize. Curve type I is obtained for acetylenic compounds that polymerize by autocatalytic reaction kinetics.

Figure 7 is a graph of percent reflectance at 50°C and 25°C vs. time for 4,6,8-tetradecatriyn-14-monomethyl urethane.

Figure 8 is an environmental indicator device that may be measured by the process of this invention. The device includes a variable region 8 of reflectivity that comprises an acetylenic compound and four non-variable regions 9, 10, 11 and 12 of reflectivity.

Figure 9 is a graph of reflectance values at 60°C and 40°C vs. time for 2,4-hexadiyne-1,6-diol-bis-p-toluene sulfonate.

Figure 10 is an Arrhenius-type plot showing the number of days vs. temperature (°F) for an epoxy

prepreg to degrade to unacceptable quality (i.e., loss of tack). Arrhenius-type plots showing the number of days vs. temperature (°F) for acetylenic indicators (i.e., full life and pretreated indicators) to reach their endpoint are also shown by Figure 10.

## Detailed description of invention

This invention relates to a novel process for measuring the environmental exposure of an environmental exposure indicating device. In the context of this invention, the term environmental exposure includes radiation exposure, chemical exposure, temperature exposure, humidity exposure, and cumulative time-temperature exposure. Devices that measure these exposures may be employed for the determination of the remaining useful life of a variety of products, wherein the useful life of said products is directly related to the environmental exposure of the products. The process of this invention is capable of automatically determining minute degrees of environmental exposure. More particularly, environmental exposure and the accompanying remaining useful life or extent of processing of a product may be measured incrementally and automatically.

Environmental indicating devices that may be measured by the process of this invention include devices that have at least one non-variable region of reflectivity and at least one variable region of reflectivity that undergoes reflectivity changes upon exposure to environmental stimuli. The reflectivity change of the variable region may occur *via* numerous means. For example, the variable region may undergo reflectivity changes upon response to environmental exposure due to an intrinsic thermally induced chemical reaction or a thermally induced mixing, such as solvent mixing, of two components. However, in the preferred embodiments of the invention, the variable region of reflectivity simply comprises an indicating material which undergoes incremental reflectivity changes upon exposure to environmental stimuli. Acetylenic compounds having at least two conjugated triple bonds (hereinafter referred to as acetylenic compounds), are especially preferred for use as indicating materials in the process of this invention.

Other indicating materials that undergo reflectivity changes (e.g. increases or decreases in reflectivity) upon exposure to environmental stimuli are disclosed in *Photochromism* (Glenn H. Brown, editor, *Techniques of Chemistry Vol. III*, John Wiley & Sons, 1971), incorporated herein by reference. Illustrative generic examples of indicating materials disclosed in this book include spiropyrans, triarylmethane dyes, polymethine dyes, azo compounds, azomethine compounds, alkali metal salts, alkaline earth solids, and alkali metal azides. Examples of these generic classes of compounds include: 5,7-dichloro-6-nitro-BIPS (BIPS=1',3',3'-tri-methylspiro-[2H-1-benzopyran-2,2'-indoline), 6-chloro-8-nitro BIPS, 7-nitro BIPS, Malachite Green, Crystal Violet, Pararosaniline, 4-dimethylaminoazobenzene, 4-nitroazobenzene, azobenzene, 1,2-naphthoquinone-2-diphenylhydrazone, sodium chloride, potassium chloride, potassium bromide, La doped $CaF_2$, Ce doped $CaF_2$, Gd doped $CaF_2$, $KN_3$, and $NaN_3$.

Spiropyrans are preferred in many embodiments of this invention. Many of these materials can be incorporated into a film and printed in an essentially colorless form. Upon exposure to light of the appropriate wavelengths, the spiropyran becomes highly colored. This colored state will fade back to its original color or near its original color as a function of time and temperature. Thus, once activated the reflectance will increase. The thermal fade time can be adjusted from seconds to years at room temperature depending upon the spiropyran and the solvent/coating system employed.

The process of this invention employs reflectance or reflectivity measurements of indicator devices in order to determine the extent of environmental exposure. Reflectance or reflectivity is measured as the amount of light at selected wavelengths as determined by an appropriate detector after said light has impinged upon a surface. A perfectly reflective material has a reflectance equal to one. An absorbing material has a decreased reflectance that approaches zero for high absorbances. The variable materials employed as environmental indicators in this application have a reflectance between zero and one. Percent reflectance or percent reflectivity is equal to one hundred times the reflectivity.

The process of this invention includes two primary steps. The first primary step includes several substeps or operations. In the first step of the process, an indicator device having regions of reflectivity as described is read with a suitable reflectance scanner in order to obtain a reflectance measurement. The reflectance measurement may be obtained in a single operation such as by moving the indicator device by a reflectance scanner having a light source and photo cells in a fixed position, by moving a hand-held scanner over the reflecting areas of the indicator device, or by conventional moving beam scanners. In deriving the reflectance measurement, the scanner emits a beam of light. As each region is subjected to the beam of light, a certain amount of light is reflected by each region. The amount of reflected light for each region is determined by a detector, and this information is used to determine the difference between the respective amounts of reflected light from the variable and non-variable regions of the device. The relative reflectance of the environmentally exposed indicator device is measured in this manner.

The second primary step of the process involves correlating the relative reflectance measurement obtained by the first primary step of the process with reflectance data that has been previously established to represent the remaining useful shelf-life of the product being monitored in order to determine the useful shelf life of the product. In simpler terms, the second primary step of the process determines the useful life of the product being monitored by matchingr the relative reflectance value of the first step of the process with a predetermined reflectance-remaining shelf-life relationship. Due to obvious economical and

practical considerations, the second step of the process should be conducted automatically *via* conventional computer techniques.

It should be appreciated, however, that the efficient use of an automated computer system to match the reflectance measurement with a predetermined reflectance-remaining shelf-life relationship will require that the environmental indicator labels contain a product identification means and/or an indicating material identification means. These requirements may be necessary in order for the reflectance of the product being monitored to be correlated with the proper predetermined reflectance-useful shelf-life relationship for the particular product being monitored. Suitable identification means for the products being monitored and for the indicating material include any image, symbol, letter, numeral, code system or similar means that may be automatically read by an optical scanner. An optical scanner simply consists of a light source capable of illuminating a surface, a detector to sense the amount of reflected light, and a means to output the signal from the optical detector. Conventional bar code identification procedures are preferred for identication purposes in many embodiments of this invention when an automated computer system is employed to correlate reflectance with a predetermined reflectance-remaining shelf-life relationship.

In the especially preferred embodiments of this invention, acetylenic compounds are employed as environmental indicating materials. Acetylenic compounds incrementally or gradually undergo reflectivity changes, usually *via* a polymerization mechanism that results in the development of color, upon exposure to environmental stimuli. In the preferred embodiments of the invention, polymerization of the acetylenic compound is accompanied by a simultaneous incremental development of color absorbing light in the 300 nm to 850 nm spectral region. Many acetylenic compounds having at least two conjugated triple bonds that are useful as environmental indicating materials have been previously disclosed and are well known to those skilled in the art. More specifically, acetylenic compounds which are useful as environmental indicating materials are disclosed in United States Patent Nos. 3,999,946; 4,215,208; 4,125,534; 4,189,399; 4,235,108; 4,258,352; 4,278,561; 4,228,126; 4,339,240; 4,276,190; and copending application Serial No. 208,227, filed March 19, 1980, incorporated herein by reference.

Any acetylenic composition having at least two conjugated acetylenic groups ($-C{\equiv}C-C{\equiv}C-$) that undergoes a gradual color change exhibited by decreased reflectivity at some wavelength may be employed in the preferred practice of this invention. Preferred acetylenic monomers include those of the formula $R_1-C{\equiv}C-C{\equiv}C-R_2$ wherein $R_1$ and $R_2$ are the same or different and may include one or more moieties selected from the group consisting of alkyl, alkyoxy, aryl, carbonyl, benzoate, urethane, sulfonate, alcohol or acid moieties. Acetylenic compounds which are particularly preferred in many embodiments of this invention contain an alkoxycarbonylalkylene moiety or a sulfonate moiety. Particularly preferred acetylenic compounds that contain these moieties include 2,4-hexadiyne-1,6-diol-bis-p-toluene sulfonate (hereinafter referred to as PTS), 5,7-dodecadiyn-1,12-bis-butoxycarbonylmethylene urethane (hereinafter referred to as 4 BCMU), and 4,6,8-tetradecatriyn-14-monomethyl urethane (hereinafter referred to as 3R4M).

It is believed that acetylenic compounds that contain urea moieties may be a preferred class of compounds for use in the process of this invention. Acetylenic compounds that contain urea moieties are the invention of A. F. Preziosi and T. Prusik. Such compounds are of the general formula $[RNHCONH(CH_2)_n-C{\equiv}C]_2$ wherein R is an ester containing moiety, a substituted aryl moiety, or an alkyl moiety with n being an integer from 1 to 9. The urea containing compounds may be synthesized *via* conventional procedures in accordance with the following general scheme:

$$H_2N-(CH_2)_n-C{\equiv}CH + RNCO \xrightarrow{\text{tetrahydrofuran}}$$

$$RNH\overset{\overset{O}{\|}}{C}NH(CH_2)_n-C{\equiv}CH \xrightarrow[O_2]{\text{CuCl/N,N,N',N'-tetramethylethylenediamine}} [RNH\overset{\overset{O}{\|}}{C}NH(CH_2)_n-C{\equiv}C]_2$$

wherein R and n are as described above. Illustrative acetylenic compounds that contain urea moieties believed to be useful for the process of this invention include 2,4-hexadiyn-1,6-bis(ethylurea); 2,4-hexadiyn-1,6-bis(propylurea), 2,4-hexadiyn-1,6-bis(butylurea); and 2,4-hexadiyn-1,6-bis(octadecylurea).

Environmental indicator devices that are preferred in the process of this invention comprise a substrate having at least one non-variable region of reflectivity and at least one variable region of reflectivity that includes the acetylenic compound. As previously described and as is evident from the patents relating to acetylenic compounds incorporated herein by reference, acetylenic compounds develop color usually by polymerization upon exposure to various environmental stimuli. Thus, upon exposure to environmental stimuli, the variable region of reflectance will reflect decreasing amounts of light which in turn will result in decreased reflectance. If only one non-variable region of reflectivity is employed, the acetylenic compound will cover a geometric area similar to the non-variable region. If two non-variable regions of reflectivity are employed, however, the variable region may be located between two reference bars, stripes, etc.

Alternatively, a double non-variable region indicator may be constructed by employing a variable acetylenic containing region comprising a bar, stripe or other suitable form and one non-variable region comprising a colored bar, stripe, etc., wherein a second non-variable region comprises the remainder of the substrate. However, in many preferred embodiments of the invention, the environmental indicators employ four non-variable regions of reflectivity and one variable region of reflectivity in the form of a label which may be applied to a product. In this preferred embodiment, the variable region comprises an acetylenic compound in bar or stripe form, etc., with two non-variable regions of reflectivity having different reflectivities being located on each side of the variable region. Figure 1 illustrates this preferred type of indicator device which may be employed in the process of this invention. As the cumulative effects of time and temperature cause the variable region to gradually polymerize, the variable region will reflect decreasing amounts of light at the analyzing wavelength, thus resulting in a decreasing reflectance value. This phenomenon (i.e., decreasing reflectance of the variable region) is illustrated by Figures 2, 3 and 4 which illustrate a deeper and deeper colored variable region. In many preferred embodiments of the invention, the labels include a bar code product identification means 6 and a bar code acetylenic compound identification means 7 as is illustrated by Figure 5.

It should be appreciated that the above-described indicator devices are preferred devices for this invention and that indicator devices may be constructed in other manners. All that is required for the process of this invention is that the indicator devices have at least one variable region of reflectivity and a non-variable region of reflectivity. Using these criteria, one may design any shape or form of indicator device that is desired for a particular product. Also, it will be appreciated that some of the indicating materials that are useful for this invention may undergo reflectivity changes upon exposure to visible or ultraviolet radiation. In order to prevent such changes from occurring, the indicator devices may contain any one of a number of protective radiation absorbers known to those skilled in the art.

Environmental indicator devices having at least one variable region of reflectivity and at least one non-variable region of reflectivity comprising an acetylenic compound are also included in this invention. In many preferred embodiments of this invention, the indicator devices include a product identification means. In many especially preferred embodiments of this invention, the indicator devices include an acetylenic composition identification means. Identification means that are preferred include any image or symbol that can be read by an automatic scanner, with conventional bar codes being especially preferred.

It will also be appreciated that a simple yes-no device capable of indicating the expiration of shelf-life based upon an established reflectance-shelf-life correlation is part of this invention. In this case, a computer could decide if a relative reflectance value of the variable region has reached a threshold value which has previously been established to represent the end of useful shelf-life for a particular product. If this value has been reached, the device would not be read by the system and the product could be discarded.

Substrates that may be employed for constructing devices that may be employed in the process of this invention include paper, paperboard, fiberboard, cardboard, Kimdura®, Mylar®, polyethylene, polypropylene, polyacrylate polymers and copolymers, cellulose ethers, cellulose esters, mixed esters or other similar materials. Other exemplary examples of materials that may be employed as substrates for the environmental indicator labels include synthetic resins and plastics as described in U.S. Patent No. 3,501,302, col. 19, lines 14—51, herein incorporated by reference. Additionally, it should be appreciated that containers for various products may also serve as a substrate upon which the environmental indicator labels are constructed.

For the preferred devices which employ acetylenic compounds as indicating materials, the variable region of the devices may be applied to the substrate in various fashions. For example, an ink solution comprising an acetylenic compound and solvent may be sprayed onto the substrate in order to deposit the acetylenic compound onto the desired area of the substrate. The solution should include the acetylenic compound in an amount comprising about 1% to about 60% and preferably about 10% to about 30% by weight. This method, in effect, employs an acetylenic monomer as a dye (i.e., monomer soluble in the ink vehicle). This method is more particularly described in U.S. Patent No. 4,189,399 where acetone, with lacquer added as a binder, is employed to dissolve the acetylenic compound. Upon spray coating of a substrate, followed by evaporation of the acetone, an active indicator is printed. Of course, this ink system could be printed by more conventional method such as flexographic, screen, gravure, letterpress, ink-jet printing, or the like.

Solvents that may be employed for forming the above-described ink solutions depend somewhat upon the nature of the particular acetylenic compound. More particularly, polar solvents and moderately polar solvents are preferably employed for symmetrical monomer. Representative solvents for symmetrical monomers include acetic acid, propanoic acid, heptanoic acid, nonanoic acid, hydroxy acetone, 1,1,3,3-tetramethylurea, triethanolamine, n-decylamine, sec-phenethyl alcohol, ethyl ester of cinnamic acid, triacetal glycerol, diethyl sebacate, decyl ester of decanoic acid, mono-ethyl ester of succinic acid, dimethyl sulfoxide, p-xylene, and mixtures of ortho, meta, and para xylene. Additionally, water is a suitable solvent for alkali metal salt systems.

Moderately polar and non-polar solvents are more amenable to unsymmetrical acetylenic monomers. Representative examples of moderately polar and non-polar solvents which may be utilized in forming the solutions include p-xylene, 4-chlorotoluene, 2-chloro-p-xylene, 3-methyl biphenyl, dodecane, tetradecane,

1-hexadecene, 1-heptadecene, 1-pentadecyne, 10-methyl stearic acid, ethyloctyl-ether, 3,3-dimethyl-2-butanol, cycloheptanol, 4-methyl-cyclohexanol, 10-undecen-1-ol, and triethylene glycol.

Another method for applying the acetylenic compound to the indicator devices involves initially grinding the acetylenic compound into fine particles and forming a suspension of the particles in a suitable binder-solvent system. Suitable binders for forming these suspensions include natural and synthetic plastics, resins, waxes, colloids, gels, and the like including gelatin and other similar binders described in U.S. Patent No. 3,501,302 at col. 20, lines 13—43 incorporated herein by reference. The suspension comprising the binder and the acetylenic compound may then be applied to the desired area of the label by spraying, screen printing, gravure, letterset, or other conventional printing means. This method of applying the acetylenic compound to the substrate employs the active acetylenic material as a pigment in a conventional ink. This method is more particularly described by U.S. Patent No. 3,501,297 herein incorporated by reference.

It should be appreciated that another method for applying the acetylenic compound to the substrate indicator device is in the form of an ink *via* conventional printing techniques. Inks may be formed by dissolving about to 1 to 60 parts by weight of an acetylenic compound in 99 to 40 parts of a conventional colorless ink. Printing techniques that may be employed to print acetylenic inks on the desired area of the indicator labels include gravure, screen flexographic, letterpress, offset, ink-jet or other conventional printing means.

It should be appreciated that solutions comprising a solvent and an environmental indicating material may be applied to a substrate in the form of conventional microencapsules.

As stated above, the process of this invention may be employed to monitor radiation, chemical, humidity, temperature, and cumulative time-temperature exposures. However, at present, it is believed that the process is most useful for monitoring time-temperature exposures of environmental indicating devices that are in some manner attached to products which experience progressive quality changes as they are subjected to certain temperatures over certain periods of time. Thus, in many preferred embodiments of this invention, cumulative time-temperature indicating devices are monitored.

In order to practice the preferred process of this invention, however, certain information must have been previously ascertained. More particularly, the following information should have been obtained: 1) the time-temperature quality change characteristics of the product that is to be monitored; 2) an acetylenic compound having polymerization characteristics (i.e., color change) in a time-temperature range similar to that of the quality change characteristics of the product to be monitored; 3) an electro-optical system that emits and detects changes of reflected light which may be absorbed by the acetylenic compound chosen; and 4) reflectivity values of the acetylenic compound (deposited with the method of choice on a substrate) that have been correlated with time-temperature exposure.

One method for determining the time-temperature quality change characteristics of the product being monitored is isothermal testing. Isothermal testing employs at least two, and preferably more than two, temperature controlled chambers. Samples of the product to be monitored are stored at various temperatures and product quality of each sample is monitored as a function of time at that temperature to determine the cumulative effects of time and temperature on product quality. Isothermal testing will yield the time at which the product will have degraded to an unacceptable quality at that temperature. For example, the time as a function of temperature required for an epoxy prepreg (Hercules Corporation Product No. 3501-6/AS) to lose tack is shown in Table A. Tack is defined as the ability of a substance to adhere to a substrate or the ability of a substance to adhere to itself.

TABLE A*

| Time (days) | Temperature (°F) | Temperature (°C) |
|---|---|---|
| 0.3 | 160 | 71.1 |
| 2.0 | 120 | 48.9 |
| 3.8 | 104 | 40.0 |
| 29.0 | 74 | 23.5 |
| 29.0 | 78 | 25.5 |

* These data were obtained from a research report filed with the United States Government by Z. N. Sanjana of the Westinghouse Corp. Research and Development Center in accordance with U.S. Government Contract No. N00019-78-C-0600. The research report is a public document and may be obtained from the Department of the Navy.

The epoxy prepreg and many other products, including perishables such as vaccines, foodstuffs, etc., are believed, and some have been shown, to degrade *via* Arrhenius or near Arrhenius type kinetics over a certain temperature range. The equation that describes this relationship at two temperatures is:

$$(1) \qquad 1n\left(\frac{t_L}{t_H}\right) = \frac{E_a\,\Delta T}{1.9872\,T_H\,T_L}$$

wherein $t_L$ is the time to reach the end of the shelf-life at some temperature $T_L$ (°K); wherein $t_H$ is the time to reach the end of the shelf-life at some temperature $T_H$ (°K); wherein $\Delta T = T_H - T_L$ where $T_L < T_H$; and wherein $E_a$ is the activation energy (cal/mole). The described relationship assumes that the time required to reach the endpoint (i.e., end of shelf life and accompanying unacceptable product quality) is inversely proportional to the rate of degradation. Once the time-temperature quality change requirements are known, one may then examine available literature in order to determine the acetylenic compounds that polymerize and change color over the time-temperature range that is similar to the degradation time-temperature range of the product being monitored. U.S. Patent Nos. 3,999,946; 4,189,399; 4,339,240 and 4,215,208 are particularly useful sources of information in this respect.

For example, for the epoxy prepreg discussed above, one would desire an acetylenic compound that polymerizes and develops color over a time-temperature range that is similar to the data in Table A above. A compound should be selected that does not undergo a complete color development sooner than the time rqeuired for the product to reach unacceptable quality according to the data in Table A. However, the compound could undergo complete color development over a longer time period and still be useful. This is because the process of this invention can determine incremental color changes of the indicating compound as a function of time and temperature. Thus, all that is required is that the acetylenic compound chosen should not undergo a complete color change prior to the end of the useful shelf-life of the product being monitored. Also, if desired, an indicating material that undergoes complete color development over a longer time-temperature period may be pre-treated by thermal annealing or other means so that complete color development by the indicating material will correspond exactly to the end of the shelf-life of the product to be monitored.

In order to select an acetylenic compound that would be suitable for monitoring a time-temperature range that is similar to the degradation data in Table A above, one might consult U.S. Patent No. 3,999,946. Example 7 of this patent teaches that 2,4,6,8-decatetrayn-1,10-bis-ethylurethane, $[C_2H_5NHOCOCH_2C{\equiv}C{-}C{\equiv}C\!\!+_2$, rapidly develops a blue color in 2.5 hours at 50°C. This complete color development is too fast for the compound to be of any value as an indicator material for a product that has the degradation data reported in Table A. Compound 1 $[(C_2H_5NHOCOCH_2C{\equiv}C\!\!+_2]$ in Example 6 of U.S. Patent No. 3,999,946, undergoes a color change to a light pink after 960 hours at 40°C. This compound changes color too slowly, at least for practical purposes, for the data in Table A. Example 2 of U.S. Patent No. 3,999,946 teaches that 2,4-hexadiyne-1,6-diol-bis-p-toluene sulfonate (i.e., PTS) undergoes a complete color development in 0.46 days at 70°C, 1.3 days at 60°C and 3.5 days at 40°C. These complete color changes are longer than the times listed in Table A for unacceptable degradation at the same temperature. However, the correlation is sufficiently close, and incremental color change measurements of the indicating material may be determined. Thus, PTS is a candidate indicating material for the epoxy prepreg.

After a suitable acetylenic compound has been selected for use in the process, an electro-optical scanner capable of measuring reflectance may be selected. Bar code scanning technology is preferred for the practice of this invention. Thus, any conventional bar code scanner that operates with light in the appropriate wavelength region is suitable. It should be appreciated, however, that the process of this invention is not limited to bar code technology, and other electro-optical hardware such as densitometers may also be employed in the practice of this invention.

The preferred acetylenic compositions for this invention polymerize to blue, red or black upon being subjected to various time-temperature exposures. These preferred compositions are described in more detail above. Blue polymers absorb light at wavelengths below about 650 nm. Red polymers absorb light below about 580 nm. The He-Ne laser scanner operates at 633 nm. The Intermec 1240 and 1241 (Intermec Corporation product Nos. 1240 and 1241) scanner wands operate with a 630 nm LED. The He-Ne laser scanner and the Intermec scanners are ideally suited for blue-colored polymers or red polymers that turn black/metallic. An incandescent lamp with an appropriate filter could be used for polymers of any color. Lasers using gases such as argon, krypton, argon-krypton or helium-cadmium may be used for either red or blue colored polymers. Dye lasers may also be employed for either color polymers. These electro-optical systems or other similar electro-optical system employing an appropriate light source and detector are suitable for the process of this invention. The major criterion one considers when choosing an electro-optical system is whether the particular instrument emits light that will be absorbed by the polymers that have been employed as an indicating material. If the polymer will absorb some or all of the light emitted based upon its extent of polymerization, the electro-optical system or instrument is a candidate for the practice of this invention. Of course, the electro-optical system must include a detector that will detect the amount of reflected light.

It should be appreciated that the reflectance of the indicator device may be measured at different

wavelengths. This extends the range of conditions that may be monitored by the environmental exposure indicator devices. This principle is illustrated by Example 3.

Once the progressive quality change characteristics of the product to be monitored are known and a suitable acetylenic compound and electro-optical system have been selected for use in the process of this invention, the effects of time-temperature on the reflectance of the acetylenic compound, as employed in an environmental indicating device, may then be ascertained. In order to obtain this information, one may perform experiments similar to those which were performed on the epoxy prepreg composition to determine the epoxy prepreg degradation characteristics, except in this instance, the experiments are performed on the indicating device. Indicating devices may be stored at several temperatures, periodically withdrawn, and the reflectance of each device may be measured as described in Example 4 of this application. In following these procedures, at least two general types of curves (see Figure 6) will be generated depending upon the nature of the polymerization of the acetylenic composition, the color of the polymer and the wavelength that is being monitored.

Curve type II in Figure 6 is discussed in Example 4. Curve type I will be employed at this point to continue the discussion of the epoxy prepreg application which has been discussed above. It should be appreciated that Curve type I discussed herein should not limit in any manner the scope of this application. It is being employed for convenience, since a significant amount of our work has been conducted with the compound from which this curve has been generated (i.e., PTS).

Curve type I was generated by preparing indicators in accordance with Example 4 of this application, using PTS as the active acetylenic composition. The indicators were stored at 60°C and 40°C. The indicators were periodically withdrawn and reflectance measurements were taken. As may be seen in Figure 9, the shapes of reflectance curves for PTS at 60°C and 40°C are the same. Thus, storage of an indicator at 40°C for 120 hours is equivalent to storage of an indicator at 60°C for 13.6 hours. This amounts to dividing the time at 40°C by about 8.8 to correspond to the time at 60°C with Ea=22.5 kcal/mole according to equation (1). This also means that storage at 40°C for 60 hours followed by storage at 60°C for 6.8 hours is equivalent to storage at 40°C for 120 hours or storage at 60°C for 13.6 hours. Support for these statements may be derived from Figure 9, which is part of Example 4.

The same shape of curve should be followed at all temperatures. However, the time axis will depend on the activation energy which may be derived from equation 1. This ultimately means that a single reflectance value yields an average cumulative time-temperature exposure value for the indicator.

Therefore, a reflectance value can be correlated with the storage time at a given temperature to determine the remaining shelf life of the product. This correlation is illustrated by Examples 5 and 6. Using conventional computer techniques, an equation can be derived that correlates reflectance and remaining shelf-life.

It should be appreciated that non-Arrhenius kinetics and simple empirical correlations may also be employed to perform this function.

These same procedures may be easily followed by those skilled in the art in order to derive a reflectance time-temperature relationship for acetylenic compounds that are being considered for employment in the practice of this invention.

The process of this invention is particularly suitable for monitoring the remaining shelf-life of a variety of products that undergo degradation in response to environmental stimuli. For example, a more exact measure of the remaining useful life of perishables such as food products and pharmaceuticals may be obtained by employing the process of this invention. Other examples of products that may be monitored by the new process include materials or components that are to be employed or incorporated in some fashion into another product wherein said materials or components are subjected to environmental stimuli prior to their employment or incorporation into the final product. In cases of this nature, the process of this invention could alert one to the fact that the materials or components are defective and should not be employed.

It will be appreciated that the process of this invention can be of invaluable assistance to various entities in monitoring the remaining shelf-life or quality of various materials or products that the entity sells, manufactures, or employs in the manufacture of another article. This is especially true when computer technology is employed to correlate the information obtained by an automatic scanner and to store the information obtained concerning the remaining shelf-life that remains for particular products or a certain class of products. For example, grocery retailers could employ the process of this invention in automated fashion to obtain a daily record of the remaining shelf life of any product they sell that degrades in response to environmental stimuli. With respect to food products, including frozen food products, if the automated version of the process of this invention were employed at each step of the distribution chain (i.e., producer, shipper, wholesaler, retailer, etc.), one could monitor the remaining useful life of food products at each step of the distribution chain. Therefore, one within the distribution chain could speed up transit of certain items if necessary. Also, if a significant number of items were negligently exposed to conditions that resulted in spoilage of a number of items, computer analyses of the data collected at each step could identify the point(s) in the distribution chain where abuse occurred.

Example 1

An ink was formed by mixing 1 gram of a solid acetylenic monomer, 4BCMU, with 10 grams of Aquaset

Screen Printing Ink Extender Base WIT 800 RM (Advance). The mixture was heated to dissolve the 4BCMU, and then cooled to cause the acetylenic compound to crystallize as fine particles. The ink was used to print the variable region as in Figure 1. The black stripes were printed using Hunt Speedball Jet Black Flat Finish Screen Process Ink No. 4803. Bond paper was used as the substrate.

The indicator was irradiated for various times at a distance of 8.25 cm from the surface. The UV source used to cause the polymerization was a low pressure mercury lamp (Oriel Model 6047).

The signal from the wand (Intermec 1402) was sent through an amplifier (Skan-a-matic) to a TechLab I computer (Tec Mar, Inc.) where the data was processed as described in Example 5.

The results are shown in Table I.

TABLE I

| Percent reflectance | UV Duration (seconds) |
|---|---|
| 97 | 0 |
| 80 | 2 |
| 75 | 4 |
| 68 | 6 |
| 63 | 8 |
| 51 | 16 |
| 37 | 40 |
| 33 | 150 |

Example 2

Two labels were prepared by screen printing white and blue as reference colors on a 5 mil mylar sheet. 3R4M, an acetylenic time-temperature indicating compound, was sprayed onto paper substrates, and the paper substrates with 3R4M thereon were positioned between the two reference colors on each label in order to prepare indicator label 5. The indicator labels so prepared were stored at 50°C or 25°C for differing amounts of time in order to cause a different color change to occur in each acetylene containing substrate due to different time-temperature exposures. The reflectance value of each label at the various time-temperature exposures was measured with a MacBeth Densitometer using the blue filter of the densitometer. The reflectance readings were obtained by passing the measuring module of the densitometer over the three-colored labels in one motion. The densitometer readings were recorded for each of the printed surfaces. The reflectance data obtained is reported in Table II. The readout of a MacBeth Densitometer is in density units where density is defined as the negative logarithm of the reflectance.

TABLE II

| Indicator | Time | Temp. °C | Reflectance (%) |
|---|---|---|---|
| 1 | 0 | 50 | 83.2 |
| 1 | 3 h 50 min | 50 | 45.7 |
| 1 | 7 h 5 min | 50 | 33.1 |
| 1 | 24 h 5 min | 50 | 25.7 |
| 1 | 30 h 5 min | 50 | 24.5 |
| 2 | 0 | 25 | 83.2 |
| 2 | 3 h 50 min | 25 | 81.3 |
| 2 | 7 h 5 min | 25 | 74.1 |
| 2 | 24 h 5 min | 25 | 66.1 |
| 2 | 30 h 5 min | 25 | 61.7 |
| 2 | 150 h 20 min | 25 | 39.8 |
| 2 | 772 h | 25 | 16.0 |

The data in Table II demonstrate that indicators stored at 50°C obtain decreased reflectance values more rapidly than indicators stored at 25°C. The decreased reflectance values result from additional color development due to a higher degree of polymerization. Thus, decreased reflectance is directly related to the degree of polymerization which is a function of time and temperature.

The data reported in Table II is graphically illustrated in Figure 7.

In Figure 7, the time required to reach a reflectance value of 46% for indicators stored at each temperature (i.e., 25°C and 50°C) was used to normalize the time axis of the graph in accordance with Equation 1 (with $E_a$=25 $k_{cal}$/mole). As Figure 7 illustrates, the general curve type II of Figure 6 is obtained at 25°C and 50°C. This indicates that a cumulative exposure of 4 hours at 50°C is equivalent to 4.4 days at 25°C. A reflectivity reading of 46% was arbitrarily chosen as the endpiont because it is on the steep portion of the curve and one can accurately monitor this cumulative time-temperature effect.

Example 3

The indicators stored at 50°C in Example 4 were scanned using the red and yellow filters of the MacBeth Densitometer. The reflectance values obtained using the red and yellow filters are reported in Table III, along with the reflectance values obtained from the same samples using the blue filter of the densitometer.

TABLE III

| Indicator | Time | Reflectance (%) | | |
|---|---|---|---|---|
| | | Blue | Red | Yellow |
| 1 | 0 | 83.2 | 85.1 | 81.3 |
| 2 | 3 h 50 min | 45.7 | 60.3 | 77.6 |
| 3 | 7 h 5 min | 33.1 | 46.8 | 66.1 |
| 4 | 24 h 5 min | 25.7 | 36.3 | 56.2 |
| 5 | 30 h 5 min | 24.5 | 35.5 | — |
| 6 | 150 h 20 min | 15.5 | 23.4 | 41.7 |
| 7 | 772 h | 6.8 | 10.5 | 22.4 |

The data reported in Table III demonstrate that switching from the blue to red filter almost doubles the effective lifetime of the indicator when 46% is employed as the endpoint. Similarly, the above data demonstrate that employing the yellow filter of the densitometer yields a 25 fold increase in the lifetime of the indicator.

Example 4

PTS (25 g) was ball milled for 16 hours with Ethocell Standard-45 (3 g) and n-butanol (72 ml). The resultant finely pulverized suspension was mixed with an equal weight of 12% (W/V) Ethocell Standard-45 n-butanol solution. An indicator label as is illustrated by Figure 8 was screen printed on Scott Offset White Paper with Hunt Speedball Jet Black Flat Finish Screen Process Ink No. 4803 as the reference color on a paper background. A second reference strip was the white paper background. A variable strip was screen printed with the PTS ink described above. The indicators were stored at either 40°C or 60°C in a temperature controlled compartment for varying lengths of time. Upon removal of the indicators from the temperature controlled compartment, each indicator was scanned with an Intermec 1401 scanning wand. A signal was forwarded through an amplifier (Signal Control Module T22050, Skan-a-matic Corp.) and into a multichannel analyzer signal processor. The signal was processed by averaging the White (W) and Black (B) values and the values of the acetylenic compound (AC) as

$$R=\frac{AC-B}{W-B}.$$

This value was used to determine the reflectance of the diacetylene compound relative to the white and black reference colors.

These data are presented in Figure 9.

Example 5

Figure 10 illustrates a plot of the time required for a graphite-impregnated composite material (Hercules Corp. product No. 3501—61A5) to lose tack. The graph also illustrates the time required for PTS, an acetylenic time-temperature composition, to reach its endpoint. Seven time-temperature labels were prepared by printing the diacetylene indicator compound on a label using flexographic printing techniques, followed by the application of a pressure sensitive optically-clear lamination over the entire printed surface. This printed tab was then placed onto an indicator card having white and black stripes used for optical triggering and electro-optical reference points. As is illustrated by Figure 10, the graphite composite material has a shelf-life that is only about 60% of the lifetime (i.e., endpoint) of the indicator. Therefore, the time-temperature indicator labels were annealed for 10.5 hours at 60°C in order to render the endpoint of the indicator equivalent to the useful shelf life of the graphite composite material.

Each time-temperature indicator was then subjected to a temperature of 60°C for a specific period of time, and then each indicator was read by an automatic scanner in order to determine relative reflectance for each indicator. In this example, an Intermec 1401 scanning wand was employed. This wand has a peak response at 630 nm which is optimum for many diacetylene compounds. The output of the wand was digitized in a multichannel analyzer as in Example 4. The signal was processed by averaging the white (W) and black (B) reference values and the values of the acetylenic compound (AC). The reflectance given as

$$\frac{AC-B}{W-B}$$

was used for subsequent calculations. This value was used becuase of the necessity of determining a relative reflectance value between the diacetylenic compound and the reference colors. This relative reflectance was independent of scan angle and optical integrity of the scanning system.

The data obtained from this example are illustrated in Table IV below.

TABLE IV

| Indicator | Temp. | Time | R* | Remaining life (%) |
|---|---|---|---|---|
| 1 | 60°C | 40.5 min | 69 | 95 |
| 2 | 60°C | 2 h 45 min | 64 | 80 |
| 3 | 60°C | 5 h 24 min | 58 | 60 |
| 4 | 60°C | 8 h 6 min | 47 | 40 |
| 5 | 60°C | 10 h 13 min | 30 | 20 |
| 6 | 60°C | 13 h 30 min | 12 | 0 |

* Percent reflectance.

Example 6

An indicator label similar in format to the indicator illustrated by Figure 5 was printed on pressure sensitive paper label stock. PTS was employed as the acetylenic indicating material. A line printer (Printronix Model 300) was used to print two interleaved two-of-five bar codes, one for product identification and one for acetylenic indicator identification. A scanning wand (Intermec Product No. 1241) with a Tech Lab I (Tec Mar) were utilized to scan the product identification bar code, acetylenic indicator identification bar code and the variable region of reflectivity of the indicator label. The system read the two bar codes and determined a relative reflectivity value of 68 percent for the variable region of the indicator label. Using the predetermined shelf-life—reflectance relationship from Example 5, a computer program automatically correlated this reflectance value to represent a remaining shelf-life of 93 percent for an epoxy prepreg product.

Example 7

Chromadye-2 (a spiropyran purchased from Chroma Chemicals, Inc. Dayton, Ohio) was dissolved in xylenes (0.5 g/20 ml). 2.4 grams of Ethocell 45 were added to this solution and mixed with heating until the solution was clear. This ink was screen printed on transparent yellow acetate sheets (approx. 5 ml thick). Several pieces of this coating were cut and fabricated as indicators (similar to Fig. 1) with the yellow barrier protecting the spiropyran coating. The indicators were activated using 30 seconds of long wavelength UV irradiation from a Model UVSL-25 mineralight lamp (Ultraviolet Products, Inc. San Gabriel, California) at a distance of 1 cm to produce a colored state. A white background paper was positioned behind the indicator and fastened with tape. Reflectance readings were taken after irradiation and the indicators were then stored at several temperatures and the reflectance was monitored. The signal was detected as in Example 1 and the results are listed in Table V. (All initial reflectance values were approximately 10%).

TABLE V

| Temp.≈24°C | | Temp.≈4°C | | Temp.≈−20°C | |
|---|---|---|---|---|---|
| %R | Time (min) | %R | Time (h) | %R | (Time (h) |
| 26 | 4 | 37 | 18.5 | 49 | 90 |
| 31 | 6 | 38 | 23.8 | 56 | 162 |
| 40 | 8 | 51 | 45.5 | 69 | 305 |
| 45 | 12 | | | | |
| 57 | 22 | | | | |
| 74 | 57 | | | | |

It should be appreciated that the increased reflectance values of this example can be analyzed and correlated in a manner analogous to Examples 5 and 6.

**Claims**

1. An automatic process for determining the quality condition of a product that undergoes progressive quality changes upon exposure to environmental stimuli by attaching an indicator device to the products and performing the following steps:

a. by electro-optically scanning said indicator device, measuring the reflectivity at specified wavelengths of:

(i) at least one region of non-variable reflectivity of said indicator device, said non-variable region being unaffected by said environmental exposure; and

(ii) at least one region of variable reflectivity of said indicator device, said variable region comprising a compound which in response to environmental conditions undergoes incremental changes in reflectivity as said environmental exposure continues, at said specified wavelength;

b. determining the reflectivity of said varaible region relative to the reflectivity of said non-variable region; and

c. using the value determined by step b which has been derived by converting the reflectivity measurement obtained by direct detection of the reflectivity to a numerical value to calculate an incremental change in the environmental exposure of said device based upon a pre-established relationship between said reflectivity of step b and the incremental change in the environmental exposure of said device; and

d. calculating from said incremental change in the environmental exposure, the quality condition of a product that undergoes progressive quality changes upon exposure to environmental stimuli, based upon a pre-established relationship between environmental exposure and product quality change.

2. A process in accordance with claim 1 wherein said wavelength band is within the range of about 400 nm to about 800 nm.

3. A process in accordance with claim 1 in which the identity of the product and its preestablished relationship is automatically determined by electro-optically scanning a product identification means of said indicator device.

4. A process in accordance with claim 3 wherein said process includes determining the identity of the compound and the pre-established relationship in the region of variable reflectivity by electro-optically scanning the compound identification means of said indicator device.

5. A process in accordance with claim 4 wherein each of said product identification means are bar codes.

6. A process in accordance with claim 4 wherein said environmental exposure is a time-temperature exposure.

7. A process in accordance with claim 1 wherein at least two regions of differing non-variable reflectivities are located adjacent to one side of said region of variable reflectivity and wherein at least two regions of differing non-variable reflectivities are located adjacent to another side of said region of variable reflectivity.

8. A process in accordance with claim 1 including at least two regions of variable reflectivity which are separated by at least one region of non-variable reflectivity and at least one region of non-variable reflectivity adjacent said regions of variable reflectivity.

9. A process in accordance with claim 1 wherein the compound in the region of variable reflectivity is an acetylenic composition of the formula R1—C≡C—C≡C—R2 wherein R1 and R2 may be the same or different and contain one or more moieties selected from the group consisting of alkyl, alkoxy, aryl, carbonyl, sulfonate, benzoate, urethane, urea, alcohol or acid moieties.

10. A process in accordance with claim 9 wherein R1 and R2 are the same and are an alkoxycarbonylalkylene containing moiety.

11. A process in accordance with claim 10 wherein said acetylenic composition is 5,7-dodecadiyn-1,12-bis-butoxycarbonylmethylene urethane.

12. A process in accordance with claim 9 wherein R1 and R2 are the same and are a sulfonate containing moiety.

13. An electro-optically readable environmental indicating device having a region of variable reflectivity whose incremental change in reflectivity upon exposure to environmental stimuli is convertible to a digital value wherein said device includes at least one region of variable reflectivity and at least one region of non-variable reflectivity.

14. The device of claim 13 wherein the variable region comprises an acetylenic composition having at least two conjugated acetylenic moieties.

15. A product that undergoes progressive quality changes in response to environmental exposure having attached thereto the device of claim 13.

16. A product in accordance with claim 15 that undergoes progressive quality changes in response to time-temperature exposure.

17. A device in accordance with claim 13 that includes a product identification means.

18. A device in accordance with claim 13 that includes a compound identification means.

19. A device in accordance with claim 17 wherein said product identification means may be the same or different and are selected from the group consisting of bar codes, letters, numerals, or combinations thereof.

20. A device in accordance with claim 19 wherein said product identification are bar codes.

21. An automatic process for determining the quality condition of a product that undergoes progressive quality changes upon exposure to environmental stimuli by attaching an indicator device to the products and performing the following steps:

a. by electro-optically scanning said indicator device, measuring the reflectivity at specified wavelengths of:

(i) a region of non-variable reflectivity of said indicator device, said non-variable region being unaffected by said environmental exposures; and

(ii) at least one region of variable reflectivity of said indicator device, wherein said variable region undergoes incremental reflectivity changes only from a preselected type of environmental exposure upon exposure to environmental stimuli;

b. determining the reflectivity of said variable region relative to that of said non-variable region by computer measurement of the analog value of said reflectivity change in the region of variable reflectivity; and

c. using the value determined by step b which has been derived by converting the reflectivity measurement obtained by the direct detection of reflectivity to a numerical value to calculate an incremental change in the environmental exposure of said device, based upon a pre-established relationship between said reflectivity of step b and the incremental change in the reflectivity, from the environmental exposure of said device; and

d. calculating from said incremental change in the environmental exposure, the quality condition of a product that undergoes progressive quality changes upon exposure to environmental stimuli, based upon a pre-established relationship between environmental exposure and product quality change.

22. A process in accordance with claim 21 in which the identity of the product and its pre-established relationship are automatically determined by electro-optically scanning a product identification means of said indicator device.

23. A process in accordance with claim 21 wherein said process includes determining the identity of said indicating compound and the pre-established relationship in the region of variable reflectivity by electro-optically scanning the indicator material identification means of said indicator device.

24. A process in accordance with claim 22, wherein said identification means is selected from the group consisting of bar codes, letters, numerals, and combinations thereof.

25. A process in accordance with claim 23, wehrein said identification means is selected from the group consisting of bar codes, letters, numerals, and combinations thereof.

26. A process in accordance with claim 21 wherein the identity of the product and its pre-established relationship are automatically determined by electro-optically scanning a bar code containing a product identification means of said indicator device, wherein identity of said indicating compound and the pre-established relationship in the region of variable reflectivity are determined by electro-optically scanning a bar code containing an indicator material identification means of said indicator device, and wherein said environmental exposure is a time-temperature exposure.

27. A process in accordance with claim 21 wherein said environmental exposure is a time-temperature exposure.

28. A process in accordance with claim 21 wherein said environmental exposure is exposure to ionizing radiation.

29. A process in accordance with claim 21 wherein said environmental exposure is exposure to visible light.

30. A process in accordance with claim 21 wherein said environmental exposure is exposure to ultraviolet light.

31. A process in accordance with claim 21 wherein said environmental exposure is exposure to peak temperature.

32. A process in accordance with claim 21 wherein said environmental exposure is exposure to microwave radiation.

**Patentansprüche**

1. Automatisches Verfahren zum Bestimmen der Beschaffenheit eines Produktes, das unter der Einwirkung von Umwelteinflüssen fortschreitende Beschaffenheitsänderungen erfährt, wobei an den Produkten eine Anzeigeeinrichtung angebracht wird und folgende Schritte durchgeführt werden:

a. durch elektrooptisches Abtasten der Anzeigeeinrichtung wird das Reflexionsvermögen bei vorherbestimmten Wellenlängen gemessen, und zwar

(i) in einem Bereich, in dem die Anzeigeeinrichtung ein underänderliches Reflexionsvermögen hat und der durch die Umwelteinwirkung nicht beeinflußt wird, und

(ii) in einem Bereich, in dem die Anzeigeeinrichtung ein veränderliches Reflexionsvermögen hat und in dem eine Verbindung vorhanden ist, deren Reflexionsvermögen bei der vorherbestimmten Wellenlänge unter fortgesetzter Einwirkung der Umwelt in Abhängigkeit von den Umgebungsbedingungen inkrementale Veränderungen erfährt;

b. das auf das Reflexionsvermögen des unveränderlichen Bereiches bezogene Reflexionsvermögen des veränderlichen Bereiches wird bestimmt; und

c. der im Schritt b erhaltene Wert, der ermittelt wurde, indem der durch direkte Erfassung des Reflexionsvermögens ermittelte Meßwert für das Reflexionsvermögen in einen Zahlenwert umgesetzt wurde, wird dazu verwendet, auf Grund einer vorherermittelten Beziehung zwischen dem im Schritt b ermittelten Reflexionsvermögen und der inkrementalen Veränderung der Umwelteinwirkung auf die Einrichtung eine inkrementale Veränderung der Umwelteinwirkung auf die Einrichtung zu berechnen; und

d. auf Grund der genannten inkrementalen Veränderung der Umwelteinwirkung und einer vorherermittelten Beziehung zwischen der Umwelteinwirkung und der Beschaffenheitsänderung des Produktes wird die Beschaffenheit eines Produktes berechnet, das unter Umwelteinwirkungen fortschreitende Beschaffenheitsänderungen erfährt.

2. Verfahren nach Anspruch 1, dadurch gekennzeichnet, daß das Wellenlängenband im Bereich von etwa 400 nm bis etwa 800 nm liegt.

3. Verfahren nach Anspruch 1, dadurch gekennzeichnet, daß die Identität des Produktes und seine vorherermittelte Beziehung durch elektrooptisches Abtasten einer Produktidentifizierungseinrichtung der Anzeigeeinrichtung automatisch bestimmt werden.

4. Verfahren nach Anspruch 3, dadurch gekennzeichnet, daß in dem Verfahren die Identität der Verbindung und die vorherermittelte Beziehung in dem Bereich mit dem veränderlichen Reflexionsvermögen durch elektrooptisches Abtasten der die Verbindung identifizierenden Einrichtung der Anzeigeeinrichtung bestimmt werden.

5. Verfahren nach Anspruch 4, dadurch gekennzeichnet, daß die Produktidentifizierungseinrichtungen jeweils aus einem Strichcode bestehen.

6. Verfahren nach Anspruch 4, dadurch gekennzeichnet, daß die Umwelteinwirkung eine zeit- und temperaturabhängige Einwirkung ist.

7. Verfahren nach Anspruch 1, dadurch gekennzeichnet, daß im Bereich einer Seite des Bereiches mit dem veränderlichen Reflexionsvermögen mindestens zwei Bereiche mit unterschiedlichen unveränderlichen Reflexionsvermögen angeordnet sind und daß im Bereich einer anderen Seite des Bereiches mit dem veränderlichen Reflexionsvermögen mindestens zwei Bereiche mit unterschiedlichen unveränderlichen Reflexionsvermögen angeordnet sind.

8. Verfahren nach Anspruch 1 mit mindestens zwei Bereichen mit veränderlichem Reflexionsvermögen, die durch mindestens einen Bereich mit unveränderlichem Reflexionsvermögen voneinander getrennt sind, und mit mindestens einem Bereich mit unveränderlichem Reflexionsvermögen, der den Bereichen mit veränderlichem Reflexionsvermögen benachbart ist.

9. Verfahren nach Anspruch 1, dadurch gekennzeichnet, daß die in dem Bereich mit veränderlichem Reflexionsvermögen vorhandene Verbindung eine acetylenische Zusammensetzung der Formel R1—C≡C≡C—R2 ist, in der R1 und R2 gleich oder verschieden sein können und eine oder mehrere Gruppen enthalten, die aus der Gruppe ausgewählt sind, die aus den Alkyl-, Alkoxy-, Aryl, Carbonyl-, Sulfonat-, Benzoat-, Urethan-, Harnstoff, Alkohol und Säuregruppen besteht.

10. Verfahren nach Anspruch 9, dadurch gekennzeichnet, daß R1 und R2 gleich sind und aus einer Alkoxycarbonylalkylen enthaltenden Gruppen bestehen.

11. Verfahren nach Anspruch 10, dadurch gekennzeichnet, daß die acetylenische Zusammensetzung 5,7-Dodecadiyn-1,12-bis-butoxycarbonylmethylenurethan ist.

12. Verfahren nach Anspruch 9, dadurch gekennzeichnet, daß R1 und R2 gleich sind und aus einer sulfonathaltigen Gruppe bestehen.

13. Elektrooptisch ablesbare Umweltanzeigeeinrichtung mit einem Bereich mit veränderlichem Reflexionsvermögen, dessen durch Umwelteinflüsse bewirkten, inkrementale Veränderung des Reflexionsvermögens in einen Digitalwert umsetzbar ist, wobei die Einrichtung mindestens einen Bereich mit veränderlichem Reflexionsvermögen und mindestens einen Bereich mit unveränderlichem Reflexionsvermögen besitzt.

14. Einrichtung nach Anspruch 13, dadurch gekennzeichnet, daß der veränderliche Bereich eine acetylenische Zusammensetzung enthält, die mindestens zwei konjugierte acetylenische Gruppen besitzt.

15. Prordukt, das unter Umwelteinwirkung fortschreitende Beschaffenheitsänderungen erfährt und an dem die Einrichtung nach Anspruch 13 angebracht ist.

16. Produkt nach Anspruch 15, das auf Grund von zeit- und temperaturabhängigen Einwirkungen fortschreitende Beschaffenheitsänderungen erfährt.

17. Einrichtung nach Anspruch 13, die eine Produktidentifizierungseinrichtung besitzt.

18. Einrichtung nach Anspruch 13, die eine die Verbindung identifizierende Einrichtung besitzt.

19. Einrichtung nach Anspruch 17, dadurch gekennzeichnet, daß die Produktidentifizierungseinrichtungen gleich oder verschieden sein können und aus der Gruppe ausgewählt sind, die aus Strichcodes, Buchstaben, Ziffern oder Kombinationen derselben besteht.

20. Einrichtung nach Anspruch 19, dadurch gekennzeichnet, daß die Produktidentifizierungseinrichtungen Strichcodes sind.

21. Automatisches Verfahren zum Bestimmen der Beschaffenheit eines Produktes, das unter der Einwirkung von Umwelteinflüssen fortschreitende Beschaffenheitsänderungen erfährt, wobei an den Produkten eine Anzeigeeinrichtung angebracht wird und folgende Schritte durchgeführt werden:

a. durch elektrooptisches Abtasten der Anzeigeeinrichtung wird das Reflexionsvermögen bei vorherbestimmten Wellenlängen gemessen, und zwar

(i) in einem Bereich, in dem die Anzeigeeinrichtung ein unveränderliches Reflexionsvermögen hat und der durch die Umwelteinwirkung nicht beeinflußt wird, und

(ii) in einem Bereich, in dem die Anzeigeeinrichtung ein veränderliches Reflexionsvermögen hat und dessen Reflexionsvermögen inkrementale Änderungen nur unter Umwelteinwirkungen einer vorgewählten Art erfährt,

b. das auf das Reflexionsvermögen des unveränderlichen Bereiches bezogene Reflexionsvermögen des veränderlichen Bereiches wird durch Computermessung des Analogwertes des Reflexionsvermögens des Bereiches mit veränderlichem Reflexionsvermögen bestimmt, und

c. der im Schritt b erhaltene Wert, der ermittelt wurde, indem der durch direkte Erfassung des Reflexionsvermögens ermittelte Meßwert für das Reflexionsvermögen in einen Zahlenwert umgesetzt wurde, wird dazu verwendet, auf Grund einer vorherermittelten Beziehung zwischen dem im Schritt b ermittelten Reflexionsvermögen und der inkrementalen Veränderung der Umwelteinwirkung auf die Einrichtung eine inkrementale Veränderung der Umwelteinrichtung auf die Einrichtung zu berechnen; und

d. auf Grund der genannten inkrementalen Veränderung der Umwelteinwirkung und einer vorherermittelten Beziehung zwischen der Umwelteinwirkung und der Beschaffenheitsänderung des Produktes wird die Beschaffenheit eines Produktes berechnet, das unter Umwelteinwirkungen fortschreitende Beschaffenheitsänderungen erfährt.

22. Verfahren nach Anspruch 21, dadurch gekennzeichnet, daß die Identität des Produktes und seine vorherermittelte Beziehung durch elektrooptisches Abtasten einer Produktidentifizierungseinrichtung der Anzeigeeinrichtung automatische bestimmt werden.

23. Verfahren nach Anspruch 21, dadurch gekennzeichnet, daß in dem Verfahren die Identität der Anzeigeverbindung und die vorherermittelte Beziehung in dem Bereich mit dem veränderlichen Reflexionsvermögen durch elektrooptisches Abtasten der die Verbindung identifizierenden Einrichtung der Anzeigeeinrichtung bestimmt werden.

24. Verfahren nach Anspruch 22, dadurch gekennzeichnet, daß die Identifizierungseinrichtung aus der Gruppe ausgewählt ist, die aus Strichcodes, Buchstaben, Ziffern und Kombinationen derselben besteht.

25. Verfahren nach Anspruch 23, dadurch gekennzeichnet, daß die Identifizierungseinrichtung aus der Gruppe ausgewählt ist, die aus Strichcodes, Buchstaben, Ziffern und Kombinationen derselben besteht.

26. Verfahren nach Anspruch 21, dadurch gekennzeichnet, daß die Identität des Produktes und dessen vorherermittelte Beziehung durch elektrooptisches Abtasten eines eine Produktidentifizierungseinrichtung der Anzeigeeinrichtung enthaltenden Strichcodes automatisch bestimmt werden, daß die Identität der Anzeigeverbindung und die vorherermittelte Beziehung in dem Bereich mit dem veränderlichen Reflexionsvermögen durch elektrooptisches Abtasten eines eine Anzeigematerial identifizierende Einrichtung der Anzeigeeinrichtung enthaltenden Strichcodes bestimmt werden und daß die Umwelteinwirkung eine zeit- und temperaturabhängige Einwirkung ist.

27. Verfahren nach Anspruch 21, dadurch gekennzeichnet, daß die Umwelteinwirkung eine zeit- und temperaturabhängige Einwirkung ist.

28. Verfahren nach Anspruch 21, dadurch gekennzeichnet, daß die Umwelteinwirkung durch ionisierende Strahlung bewirkt wird.

29. Verfahren nach Anspruch 21, dadurch gekennzeichnet, daß die Umwelteinwirkung durch sichtbares Licht bewirkt wird.

30. Verfahren nach Anspruch 21, dadurch gekennzeichnet, daß die Umwelteinwirkung durch Ultraviolettlicht bewirkt wird.

31. Verfahren nach Anspruch 21, dadurch gekennzeichnet, daß die Umwelteinrichtung durch die Einwirkung einer Spitzentemperatur bewirkt wird.

32. Verfahren nach Anspruch 21, dadurch gekennzeichnet, daß die Umwelteinwirkung durch Mikrowellenstrahlung bewirkt wird.

**Revendications**

1. Procédé automatique permettant de déterminer l'état de qualité d'un produit qui subit des variations progressives de qualité lorsqu'il est exposé à des excitations dues au milieu ambiant, ce procédé consistant à fixer un dispositif indicateur sur les produits et à exécuter les opérations suivantes:

a. mesurer, par balayage électro-optique du dispositif indicateur, le pouvoir réfléchissant, à des longueurs d'onde déterminées:

(i) d'au moins une zone, à pouvoir réfléchissant non-variable, de ce dispositif indicateur, cette zone non-variable n'étant pas affectée par l'exposition au milieu ambiant et

(ii) d'au moins une zone, à pouvoir réfléchissant variable, de ce dispositif indicateur, cette zone variable

comprenant un composé qui, en réponse à des conditions du milieu ambiant, subit des variations incrémentielles de pouvoir réfléchissant au fur et à mesure que l'exposition au milieu ambiant se poursuit, à la longueur d'onde déterminée considérée,

b. déterminer le pouvoir réfléchissant de la zone variable par comparaison avec le pouvoir réfléchissant de la zone non-variable et

c. utiliser la valeur déterminée à l'aide de l'opération b, valeur qui a été obtenue en convertissant la mesure de pouvoir réfléchissant, résultant d'une détection directe du pouvoir réfléchissant, en une valeur numérique, pour calculer une variation incrémentielle de l'exposition du dispositif au milieu ambiant, ce calcul étant basé sur une relation préétablie entre le pouvoir réfléchissant de l'opération b et la variation incrémentielle due à l'exposition du dispositif au milieu ambiant, et

d. calculer, à partir de ladite variation incrémentielle due à l'exposition au milieu ambiant, l'état de qualité d'un produit qui subit des variations progressives de qualité lorsqu'il est exposé à des excitations du milieu ambiant, ce calcul étant basé sur une relation préétablie entre l'exposition au milieu ambiant et la variation de qualité du produit.

2. Procédé suivant la revendication 1, selon lequel la bande de longueurs d'onde s'étend d'environ 400 nm à environ 800 nm.

3. Procédé suivant la revendication 1, selon lequel on détermine automatiquement l'identité du produit, et la relation préétablie qui lui est associée, en procédant à un balayage électro-optique de moyens d'identification de produit, qui font partie du dispositif indicateur.

4. Procédé suivant la revendication 3, selon lequel on détermine l'identité du composé, et la relation préétablie qui lui est associée, dans la zone à pouvoir réfléchissant variable, en procédant à un balayage électro-optique des moyens d'identification de composé, qui font partie du dispositif indicateur.

5. Procédé suivant la revendication 4, selon lequel chacun des moyens d'identification de produit est constitué par des codes barres.

6. Procédé suivant la revendication 4, selon lequel l'exposition au milieu ambiant est une exposition à la température et dans le temps.

7. Procédé suivant la revendication 1, selon lequel au moins deux zones à pouvoirs réfléchissants non-variables différents sont situées en une position adjacente sur l'un des côtés de la zone à pouvoir réfléchissant variable et au moins deux zones à pouvoirs réfléchissants non-variables différents sont situées en une position adjacente sur un autre côté de la zone à pouvoir réfléchissant variable.

8. Procédé suivant la revendication 1, selon lequel il est prévu au moins deux zones à pouvoir réfléchissant variable qui sont séparées par au moins une zone à pouvoir réfléchissant non-variable et au moins une zone à pouvoir réfléchissant non-variable située en une position adjacente aux zones à pouvoir réfléchissant variable.

9. Procédé suivant la revendication 1, selon lequel le composé situé dans la zone à pouvoir réfléchissant variable est une composition acétylénique de formule R1—C≡C—C≡C—R2 dans laquelle R1 et R2 peuvent être identiques ou différents et contiennent un ou plusieurs radicaux choisis dans le groupe constitué par les radicaux alcoyle, alkoxy, aryle, carbonyle, sulfonate, benzoate, uréthane, urée, alcool ou acide.

10. Procédé suivant la revendication 9, selon lequel R1 et R2 sont identiques et sont un radical contenant un alkoxycarbonylalcoylène.

11. Procédé suivant la revendication 10, selon lequel la composition acétylénique est le dodécadiyn-5,7 bis-butoxycarbonylméthylène-1,12 uréthane.

12. Procédé suivant la revendication 9, selon lequel R1 et R2 sont identiques et sont un radical contenant un sulfonate.

13. Dispositif indicateur de milieu ambiant, à lecture électro-optique, comprenant une zone, à pouvoir réfléchissant variable, dont la variation incrémentielle de pouvoir réfléchissant lors d'une exposition à des excitations du milieu ambiant peut être convertie en une valeur numérique, ce dispositif comportant au moins une zone à pouvoir réfléchissant variable et au moins une zone à pouvoir réfléchissant non-variable.

14. Dispositif suivant la revendication 13, dans lequel la zone variable comprend une composition acétylénique comportant au moins deux radicaux acétyléniques conjugués.

15. Produit qui subit des variations progressives de qualité sous l'effet d'une exposition au milieu ambiant et sur lequel est fixé un dispositif suivant la revendication 13.

16. Produit suivant la revendication 15, qui subit des variations progressives de qualité sous l'effet d'une exposition à la température et dans le temps.

17. Dispositif suivant la revendication 13, qui comprend des moyens d'identification de produit.

18. Dispositif suivant la revendication 13, qui comprend des moyens d'identification de composé.

19. Dispositif suivant la revendication 17, dans lequel les moyens d'identification de produit peuvent être identiques ou différentes et sont choisis dans le groupe constitué par les codes barres, les lettres, les chiffres ou des combinaisons de ceux-ci.

20. Dispositif suivant la revendication 19, dans lequel les moyens d'identification de produit sont des codes barres.

21. Procédé automatique permettant de déterminer l'état de qualité d'un produit qui subit des variations progressives de qualité lorsqu'il est exposé à des excitations dues au milieu ambiant, ce procédé consistant à fixer un dispositif indicateur sur les produits et à exécuter les opérations suivantes:

a. mesurer, par balayage électro-optique du dispositif indicateur, le pouvoir réfléchissant, à des longueurs d'onde déterminées:

(i) d'au moins une zone, à pouvoir réfléchissant non-variable, de ce dispositif indicateur, cette zone non-variable n'étant pas affectée par l'exposition au milieu ambiant et

(ii) d'au moins une zone, à pouvoir réfléchissant variable, de ce dispositif indicateur, cette zone variable ne subissant de variations incrémentielles de pouvoir réfléchissant provenant d'un type présélectionné d'exposition au milieu ambiant que lorsqu'elle est exposée à des excitations du milieu ambiant,

b. déterminer le pouvoir réfléchissant de la zone variable par comparaison avec celui de la zone non-variable, grâce à la mesure, à l'aide d'un ordinateur, de la valeur analogique de la variation de pouvoir réfléchissant dans la zone à pouvoir réfléchissant variable, et

c. utiliser la valeur déterminée à l'aide de l'opération b, valeur qui a été obtenue en convertissant la mesure de pouvoir réfléchissant, résultant de la détection directe du pouvoir réfléchissant, en une valeur numérique, pour calculer une variation incrémentielle de l'exposition du dispositif au milieu ambiant, ce calcul étant basé sur une relation préétablie entre le pouvoir réfléchissant de l'opération b et la variation incrémentielle de pouvoir réfléchissant due à l'exposition du dispositif au milieu ambiant, et

d. calculer, à partir de ladite variation incrémentielle due à l'exposition au milieu ambiant, l'état de qualité d'un produit qui subit des variations progressives de qualité lorsqu'il est exposé à des excitations du milieu ambiant, ce calcul étant basé sur une relation préétablie entre l'exposition au milieu ambiant et la variation de qualité du produit.

22. Procédé suivant la revendication 21, selon lequel on détermine automatiquement l'identité du produit, et la relation préétablie qui lui est associée, en procédant à un balayge électro-optique de moyens d'identification de produit, qui font partie du dispositif indicateur.

23. Procédé suivant la revendication 21, selon lequel on détermine l'identité du composé indicateur, et la relation préétablie qui lui est associée, dans la zone à pouvoir réfléchissant variable, en procédant à un balayage électro-optique des moyens d'identification de composé indicateur, qui font partie du dispositif indicateur.

24. Procédé suivant la revendication 22, selon lequel les moyens d'identification sont choisis dans le groupe constitué par les codes barres, les lettres, les chiffres ou des combinaisons de ceux-ci.

25. Procédé suivant la revendication 23, selon lequel les moyens d'identification sont choisis dans le groupe constitué par les codes barres, les lettres, les chiffres ou des combinaisons de ceux-ci.

26. Procédé suivant la revendication 21, selon lequel on détermine automatiquement l'identité du produit, et la relation préétablie qui lui est associée, en procédant à un balayage électro-optique d'un code-barres contenant des moyens d'identification de produit, qui font partie du dispositif indicateur, et on détermine l'identité du composé indicateur, et la relation préétablie qui lui est associée, dans la zone à pouvoir réfléchissant variable, en procédant à un balayage électro-optique d'un code-barres contenant des moyens d'identification de composé indicateur, qui font partie du dispositif indicateur, l'exposition au milieu ambiant étant une exposition à la température et dans le temps.

27. Procédé suivant la revendication 21, selon lequel l'exposition au milieu ambiant est une exposition à la température et dans le temps.

28. Procédé suivant la revendication 21, selon lequel l'exposition au milieu ambiant est une exposition à un rayonnement ionisant.

29. Procédé suivant la revendication 21, selon lequel l'exposition au milieu ambiant est une exposition à la lumière visible.

30. Procédé suivant la revendication 21, selon lequel l'exposition au milieu ambiant est une exposition à la lumière ultraviolette.

31. Procédé suivant la revendication 21, selon lequel l'exposition au milieu ambiant est une exposition à une pointe de température.

32. Procédé suivant la revendication 21, selon lequel l'exposition au milieu ambiant est une exposition à un rayonnement hyperfréquence.

FIG-1

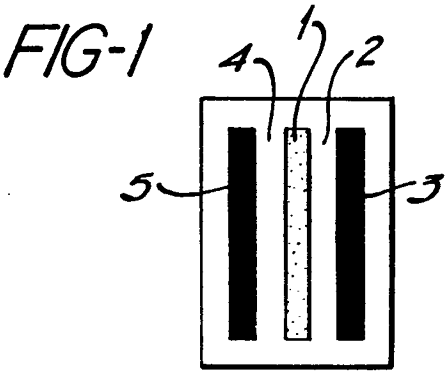


FIG-2

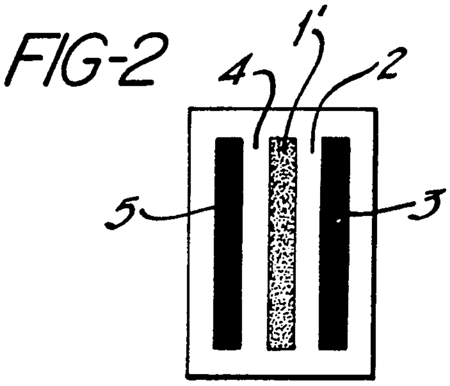


FIG-3

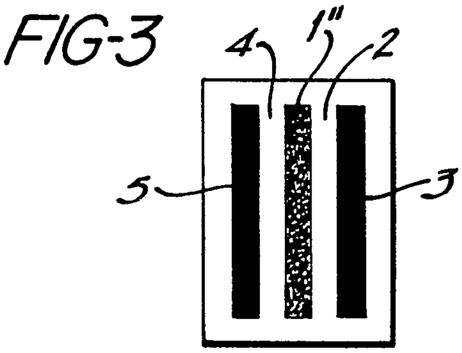


FIG-4

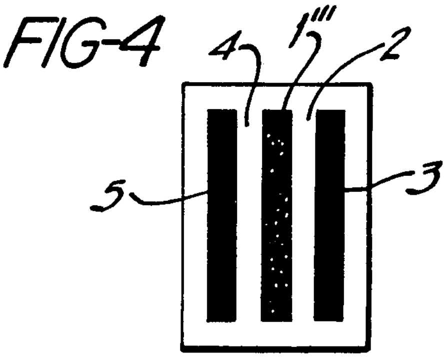


FIG-5

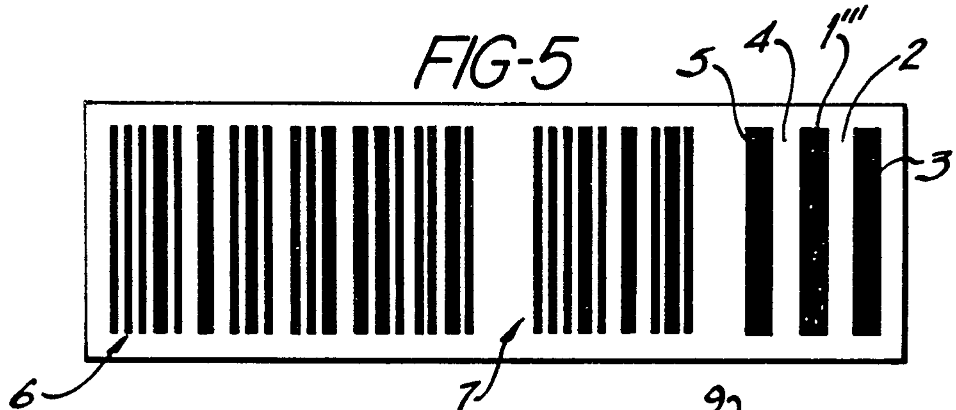


FIG-8

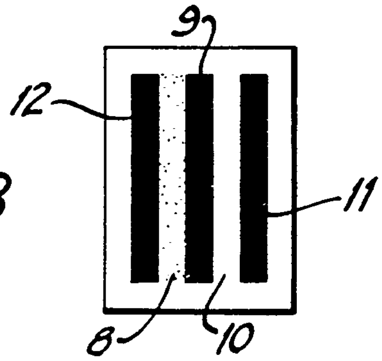

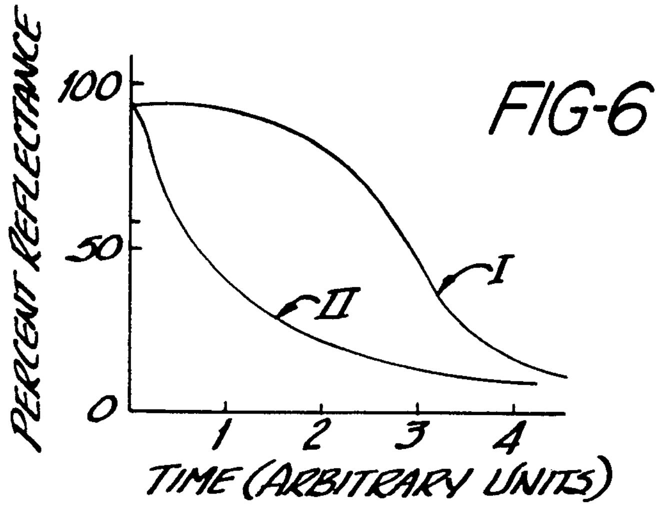
PERCENT REFLECTANCE
100
50
0
I
II
1
2
3
4
TIME (ARBITRARY UNITS)

FIG-6

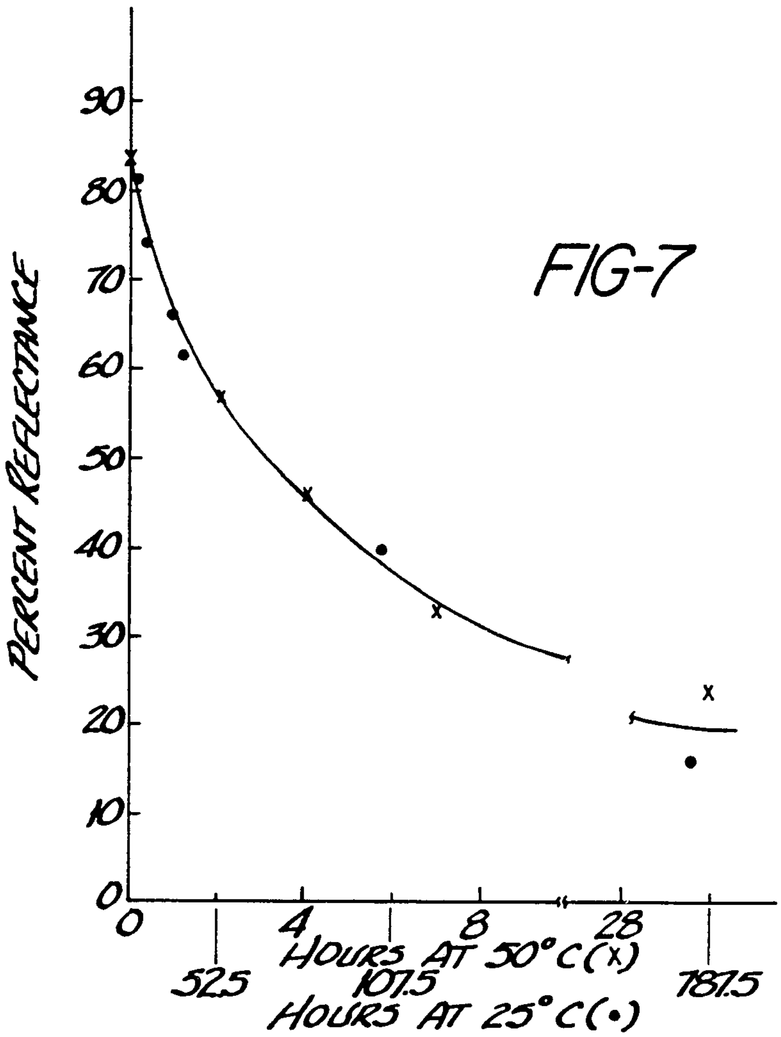
PERCENT REFLECTANCE
90
80
70
60
50
40
30
20
10
0
0
4
8
28
HOURS AT 50° C (x)
52.5
107.5
187.5
HOURS AT 25° C (•)

FIG-7

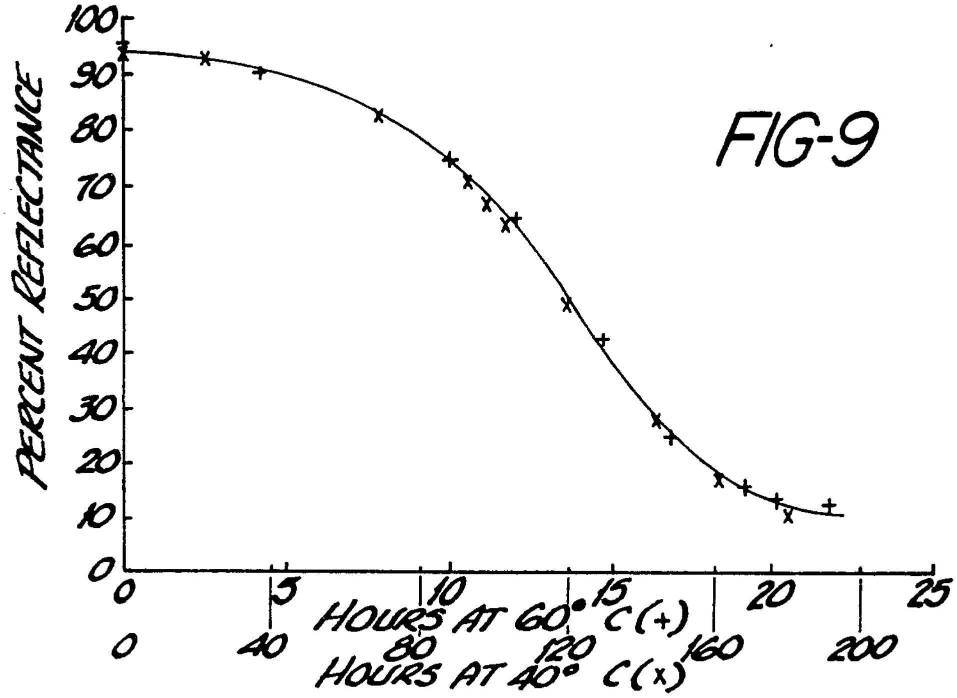
PERCENT REFLECTANCE
100
90
80
70
60
50
40
30
20
10
0
0 5 10 15 20 25
HOURS AT 60° C (+)
0 40 80 120 160 200
HOURS AT 40° C (x)

FIG-9

FIG-10

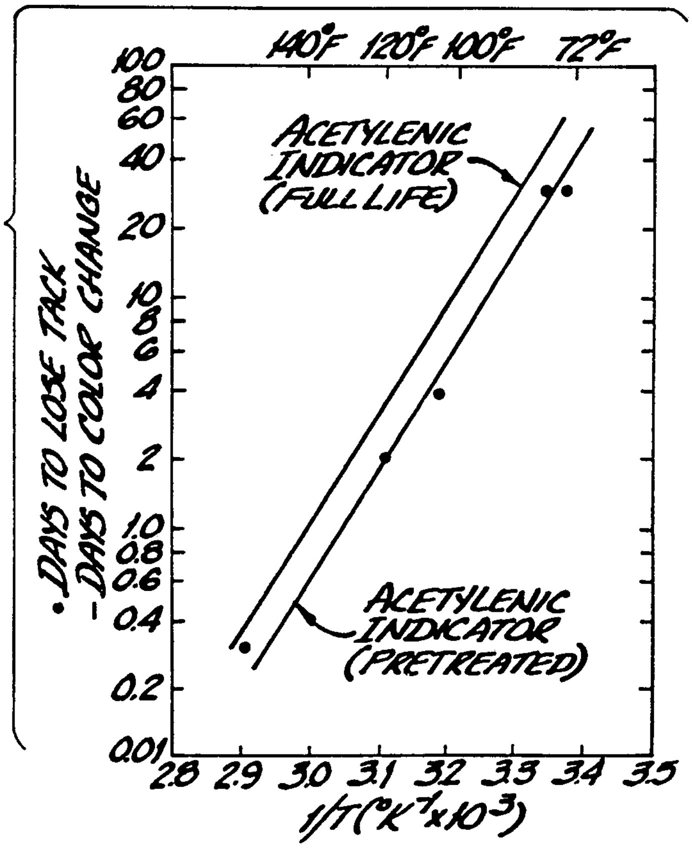
140°F 120°F 100°F 72°F
• DAYS TO LOSE TACK
- DAYS TO COLOR CHANGE
100
80
60
40
20
10
8
6
4
2
1.0
0.8
0.6
0.4
0.2
0.01
ACETYLENIC INDICATOR (FULL LIFE)
ACETYLENIC INDICATOR (PRETREATED)
2.8 2.9 3.0 3.1 3.2 3.3 3.4 3.5
1/T(°K⁻¹x10³)